Europäisches Patentamt

European Patent Office

Office européen des brevets

(11) Veröffentlichungsnummer: **0 438 666 B1**

# EUROPÄISCHE PATENTSCHRIFT

(45) Veröffentlichungstag der Patentschrift: **11.01.95**

(51) Int. Cl.⁶: **C07F 7/12**, B01J 12/00

(21) Anmeldenummer: **90122508.6**

(22) Anmeldetag: **26.11.90**

(54) **Reaktor zur Herstellung von Vinylchlorsilanen durch Umsetzung von Vinylchlorid mit Chlorsilanen bei erhöhter Temperatur.**

(30) Priorität: **23.01.90 DE 4001820**

(43) Veröffentlichungstag der Anmeldung:
**31.07.91 Patentblatt 91/31**

(45) Bekanntmachung des Hinweises auf die
Patenterteilung:
**11.01.95 Patentblatt 95/02**

(84) Benannte Vertragsstaaten:
**BE DE FR GB IT**

(56) Entgegenhaltungen:
DE-A- 2 210 189
FR-A- 2 173 833

DEPOSITED DOCUMENT, 1982, SPSTL 458,
Khp-D828

JOURNAL OF APPLIED CHEMISTRY, Band 57,
Nr. 2, Teil 2, Februar 1984, Seiten 343-347;
M.M. FLORENTSEV et al.: "Thermodynamics
and kinetics of process forobtaining vinyltrichlorosilane by thermal condensation"

CHEMICAL ABSTRACTS, Band 80, 1974, Seite
493, Zusammenfassung Nr.
133541a,Columbus, Ohio, US; V.F. MIRONOV
et al.: "Preparation of vinylsilanes by hightemperature condensation in presence of
Freons",& ZH. OBSHCH. KHIM. 1974, 44(3),
708

(73) Patentinhaber: **HÜLS AKTIENGESELLSCHAFT**

**D-45764 Marl (DE)**

(72) Erfinder: **Hange, Willy**
**Mühlenstrasse 9**
**W-7851 Wittlingen (DE)**
Erfinder: **Dietsche, Helmut**
**Talstrasse 14**
**W-7888 Rheinfelden (DE)**
Erfinder: **Seiler, Claus-Dietrich, Dr.**
**In der Klus 10**
**W-7888 Rheinfelden (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 438 666 B1

**Beschreibung**

Vorliegende Erfindung betrifft einen Reaktor zur kontinuierlichen Herstellung von Vinylchlorsilanen, insbesondere von Vinyltrichlorsilan, durch Umsetzung von Vinylchlorid mit Chlorsilanen.

Vinylchlorsilane, insbesondere Vinyltrichlorsilan, sind wertvolle Produkte, die sich einen breiten Anwendungsbereich erschlossen haben; so werden sie unter anderem bei der Schlichtung von Glasgeweben und der Herstellung von Vinylpolysiloxanen eingesetzt.

Aus der DE-PS 936 445, der DE-OS 22 10 189 und insbesondere der DE-PS 20 02 258 ist bekannt, daß beim Durchleiten von Vinylchlorid-Chlorsilan-Gemischen und insbesondere von Vinylchlorid-Trichlorsilan-Gemischen durch entsprechend aufgeheizte Rohre aus Keramik, Glas oder Eisen technisch akzeptable Vinylchlorsilan- bzw. Vinyltrichlorsilan-Ausbeuten erhalten werden, die für den Fall des Vinyltrichlorsilans je nach dem Verhältnis der Einsatzkomponenten zueinander bezogen auf den Umsatz der Unterschußkomponente, Ausbeutewerte von ca. 50 bis 98 % ergeben. Diese Resultate werden bei Benutzung von Reaktionsrohren mit lichten Durchmessern von 2,5 bis 3,5 cm und Längenausdehnungen von 122 bis 150 cm, mittleren Verweilzeiten der Reaktanden von 0,2 bis 20 Sekunden, Reaktionstemperaturen von 400 bis 750 °C und Drücken von 1 bis 3 bar erzielt. Je nach Wahl der Abmessungen des verwendeten Reaktionsrohres und der Reaktionsparameter lassen sich in derartigen Reaktionseinheiten Vinyltrichlorsilan-Mengen von 0,8 bis 3,2 Tonnen pro Monat (moto) herstellen.

Der sprunghafte Anstieg der Nachfrage nach Vinylchlorsilan-Verbindungen, insbesondere nach der Verbindung Vinyltrichlorsilan, zwang dazu zu versuchen, die Leistung pro Reaktionseinheit zu steigern.

Gemäß der in der DE-PS 20 02 258 beschriebenen Verfahrensweise werden besonders gute Ausbeuten erreicht wenn der Innendurchmesser des Reaktors bei 35 mm liegt. Beim Versuch, eine Ergebnissteigerung der Anlage durch Vergrößerung des lichten Durchmessers eines solchen Reaktors zu erzielen, um damit den Durchsatz pro Zeiteinheit zu erhöhen, muß man feststellen, daß zwar bis zu einer Vergrößerung auf 50 mm eine begrenzte, jedoch bei weitem nicht dem Rohrquerschnittsflächenzuwachs proportionale Leistungssteigerung der Reaktoreinheit eintritt. Bei einer weiteren Vergrößerung des Innendurchmessers des Reaktionsrohres tritt sogar ein Rückgang der erzielbaren Vinyltrichlorsilan-Menge, bezogen auf die Reaktorquerschnittsfläche, ein. Es ist demzufolge nicht möglich, mit den bekannten Rohr-Reaktoren die Raum-Zeit-Ausbeute von Vinylchlorsilanen dadurch zu erhöhen, daß man den lichten Innendurchmesser des Reaktors vergrößert.

Da es nur in Grenzen möglich ist, die Raum-Zeit-Ausbeute eines Rohr-Reaktors dadurch zu erhöhen, daß man die Verweilzeit der Reaktionsgase im Reaktor verkürzt, bestand die Aufgabe, einen neuen Reaktortyp für die Umsetzung von Chlorsilanen mit Vinylchlorid zu entwickeln, mit dessen Hilfe es möglich ist, die Vinylchlorsilan-Erträge so zu steuern, daß sie möglichst proportional der Vergrößerung der Reaktionsfläche, d. h. der Reaktorquerschnittsfläche, zunehmen. Dabei sollen die Reaktionsfläche beliebig vergrößerbar sein und Vinylchlorsilan-Ausbeuten erzielt werden, die zwischen 20 und 70 moto, vorzugsweise zwischen 30 und 50 moto, liegen

In Erfüllung dieser Aufgabe wurde ein Reaktor aus einem eisenhaltigen Werkstoff zur Umsetzung von Vinylchlorid und Chlorsilanen zu Vinylchlorsilanen gefunden, der dadurch gekennzeichnet ist, daß er aus einem beheizbaren Reaktionsrohr mit einem Innendurchmesser $d_1$ besteht, in dessen Innerem sich ein über die gesamte Länge des Reaktionsrohres erstreckender, axialsymmetrisch angeordneter Verdrängerkörper mit einem Außendurchmesser $d_2$ befindet und $d_2$ kleiner als $d_1$ ist. Der Verdrängerkörper ist vorzugsweise als beidseitig verschlossenes Rohr oder massive Walze ausgebildet.

Bei dieser Form der Reaktorgestaltung kann man in Abhängigkeit vom Innendurchmesser $d_1$ des äußeren Rohres und vom Außendurchmesser $d_2$ des Verdrängerkörpers jede beliebig große Reaktorringspaltquerschnittsfläche

$$(Rf = (d_1^2 - d_2^2) \cdot \frac{\pi}{4})$$

erhalten. Es hat sich dabei überraschenderweise gezeigt, daß die Umsetzung von Vinylchlorid und Chlorsilanen zu Vinylchlorsilanen in einer derartigen Reaktionseinheit im Sinne der Aufgabenstellung nur dann erfolgt, wenn zwischen dem Innendurchmesser $d_1$ des äußeren Rohres und dem Außendurchmesser $d_2$ des Verdrängerkörpers die nachfolgend aufgeführte Beziehung besteht:

$$d_1 = d_2 + a,$$

2

EP 0 438 666 B1

wobei a kleiner als oder gleich 5 cm ist.

Bereits bei geringfügiger Verletzung der Bedingung

$$d_1 = d_2 + a,$$

wobei a kleiner als oder gleich 5 cm ist, zeigt sich, daß bei erfindungsgemäß gestalteten Reaktionseinheiten die Vinylchlorsilan-Erträge nicht mehr proportional zur Zunahme der Reaktorringspaltquerschnittsfläche anwachsen, es im Gegenteil zu einem Abbruch der Reaktion kommen kann.

Selbstverständlich muß a einen den Durchmessern $d_1$ und $d_2$ entsprechenden Minimalwert aufweisen, der im allgemeinen bei 1 cm liegt. Besonders haben sich im technischen Einsatz Reaktionseinheiten bewährt, bei denen a = 4 cm beträgt.

Die Länge (L) des Reaktors wird den speziellen Erfordernissen der jeweiligen Umsetzung von Vinylchlorid mit Chlorsilanen angepaßt. So haben sich z. B. bei der Reaktion von Vinylchlorid und Trichlorsilan zu Vinyltrichlorsilan im Temperaturbereich um 650 °C und bei Verweilzeiten unterhalb von 2 Sekunden Reaktoren bewährt, deren Länge 220 bis 280 cm beträgt. Eine wesentliche Verminderung der Reaktorlänge führt zu einer weniger vollständigen Umsetzung; bei größerer Reaktorlänge tritt in diesem Temperaturbereich Umsatzverminderung ein.

Die Beheizung des Reaktors, d. h. des äußeren Reaktionsrohres, Kann auf unterschiedlichste Weise erfolgen. Die am häufigsten angewandte Art besteht in der direkten elektrischen Beheizung der Außenfläche des Reaktionsrohres. Eine andere Form der Beheizung besteht darin, das äußere Rohr über ein Zwischenmedium, zum Beispiel flüssiges Blei, zu erwärmen. Auch die Erwärmung des äußeren Rohres durch Gasflamme ist möglich. Die Art der Reaktorerwärmung beeinflußt die pro Reaktorringspaltquerschnittsfläche erzielbaren Umsätze nur unwesentlich.

Der im Inneren des äußeren Rohres axialsymmetrisch gelagerte Verdrängerkörper hat die Form eines Zylinders. Seine Oberfläche besitzt einen senkrechten Abstand a/2 von der Innenfläche des äußeren Rohres. Der Verdrängerkörper ist aus gleichem oder ähnlichem Material wie das äußere Reaktionsrohr gefertigt. Der Abstand der Oberfläche des Verdrängerkörpers von der Innenfläche des Reaktionsrohres kann sehr gering sein.

Der Verdrängerkörper ist im allgemeinen ebenso lang wie das äußere Reaktionsrohr. Falls der Verdrängerkörper wesentlich kürzer als das äußere Reaktionsrohr ist, führt dies zu Ausbeuteminderungen.

Der Verdrängerkörper kann während des Prozeßablaufes ruhen oder aber um seine Längsachse rotieren. Es hat sich gezeigt, daß mit ruhendem Verdrängerkörper weniger befriedigende Ergebnisse erhalten werden als bei Durchführung der Umsetzung mit rotierendem Verdrängerkörper. Die Drehbewegung des Verdrängerkörpers beeinflußt die Erzielung optimaler Ergebnisse positiv, wobei es ausreicht, die Umdrehungsgeschwindigkeit im Bereich von 5 bis 100 Umdrehungen pro Minute zu halten. Die bevorzugt angewandte Umdrehungsgeschwindigkeit des Verdrängerkörpers liegt bei 40 bis 60 Umdrehungen pro Minute. Eine Erhöhung der Umdrehungsgeschwindigkeit auf über 100 Umdrehungen pro Minute erbringt keine Vorteile.

Zur Stabilisierung der Drehbewegung des Verdrängerkörpers als auch zur besseren Durchmischung der Reaktanden im Reaktionsraum zwischen der Innenwand des Außenrohres und der Außenwand des Verdrängerkörpers hat es sich als vorteilhaft erwiesen, senkrecht zur Oberfläche des Verdrängerkörpers in den Reaktionsraum ragende Metallstreifen aufzubringen. Diese Streifen verlaufen vorzugsweise im wesentlichen parallel zur Achse des Verdrängerkörpers. Sie können jedoch auch im spitzen Winkel zur Achse des Verdrängerkörpers angeordnet sein. Sie können als zusammenhängender Streifen über die Gesamtlänge des Verdrängerkörpers geführt werden, aber auch als Stücke versetzt über die Oberfläche des Verdrängerkörpers verteilt angebracht werden. Es hat sich als zweckmäßig erwiesen, die radiale Kante der auf der Oberfläche des Verdrängerkörpers angebrachten Metallstreifen 1 bis 2 mm kürzer als a/2 zu halten.

Die Materialien, aus denen sowohl das Reaktor-Rohr als auch der Verdrängerkörper hergestellt sind, umfassen eisenhaltige Legierungen, wie z. B. zunderfeste Stähle, die neben Eisen als Legierungsbestandteile Chrom, Nickel und/oder Titan und/oder Molybdän enthalten.

Der Reaktor zur Herstellung von Vinylchlorsilanen durch Umsetzung von Vinylchlorid mit Chlorsilanen kann sowohl horizontal, vertikal als auch schräg angeordnet sein. Die Art der Anbringung des Reaktors hat keinen Einfluß auf die Vinylchlorsilan-Erträge der Reaktionseinheit. Es hat sich jedoch gezeigt, daß die Haltbarkeit vertikal angeordneter Reaktoren wesentlich länger ist als diejenige von Reaktoren, die in horizontaler Lage betrieben werden.

Für die Umsetzung von Vinylchlorid und Chlorsilanen in den erfindungsgemäßen Reaktoren unter Anpassung der Reaktionsbedingungen entsprechend den spezifischen Gegebenheiten der eingesetzten Chlorsilane kommen als Chlorsilan-Verbindungen z. B. Methylhydrogendichlorsilan, Ethylhydrogendichlorsi-

3

lan und Trichlorsilan in Frage.

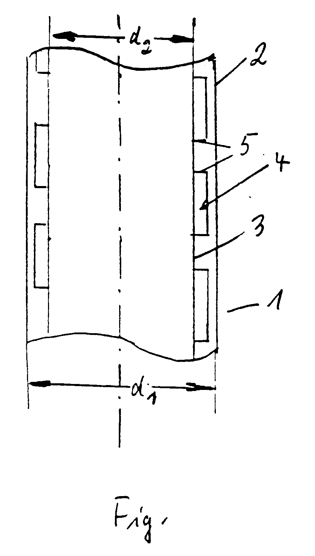

Die Erfindung wird nachstehend anhand der Herstellung von Vinyltrichlorsilan durch Umsetzung von Vinylchlorid und Trichlorsilan sowie der Zeichnung erläutert.

Beispiele 1 bis 5

Vinylchlorid und Trichlorsilan wurden im Molverhältnis 1 : 1,4 vorgemischt und in die in den Beispielen aufgeführten Reaktoren eingespeist. Alle Reaktorteile bestanden aus einem legierten Stahl des Typs 1.4828. Die Reaktionstemperaturen betrugen ca. 660 °C, die Verweilzeiten ca. 1,8 Sekunden. Die Umdrehungsgeschwindigkeit des Verdrängerkörpers betrug in allen Fällen 50 Umdrehungen/Minute. Die aus den Reaktoren entweichenden Stoffe wurden kondensiert und anschließend in Destillationskolonnen aufgearbeitet. Die in den einzelnen Reaktoren pro Monat erhaltenen Tonnagen (moto sind aus der nachstehenden Tabelle 1 ersichtlich.

Beispiel 5 ist ein Vergleichsbeispiel; es zeigt, daß die Erträge bei Vergrößerung des Wertes für a erheblich zurückgehen. Sie liegen nur noch bei etwa 5 moto/100 cm$^2$ Reaktorringspaltquerschnittsfläche, während sie erfindungsgemäß über 12 moto/100 cm$^2$ Reaktorringspaltquerschnittsfläche liegen.

In der beigefügten Figur sind die in den Beispielen eingesetzten Reaktoren schematisch im Längsschnitt dargestellt.

Der Reaktor 1 besteht aus einem Reaktionsrohr 2 mit dem Innendurchmesser $d_1$ und einem Verdrängerkörper 3 mit dem Außendurchmesser $d_2$. Auf dem Verdrängerkörper 3 sind Metallstreifen 4 mit radialen Kanten 5 angeordnet.

Tabelle 1

| Beispiel | Reaktormaße (cm) | Reaktorringspalt- querschnittsfläche $(cm^2)$ | Vinyltrichlor- silan-Erträge (moto) |
|---|---|---|---|
| 1 | $d_1 = 60$ $d_2 = 56$ $a = 4$ $L = 250$ | 364 | 47 |
| 2 | $d_1 = 30$ $d_2 = 26$ $a = 4$ $L = 230$ | 176 | 25 |
| 3 | $d_1 = 50$ $d_2 = 46$ $a = 4$ $L = 250$ | 302 | 39 |
| 4 | $d_1 = 50$ $d_2 = 48$ $a = 2$ $L = 250$ | 154 | 20 |
| 5 (Vergleichs- beispiel) | $d_1 = 50$ $d_2 = 43$ $a = 7$ $L = 250$ | 511 | 26 |

**Patentansprüche**

1. Reaktor aus einem eisenhaltigen Werkstoff mit einem beheizbaren Reaktionsrohr zur kontinuierlichen Herstellung von Vinylchlorsilanen durch Umsetzung von Vinylchlorid mit Chlorsilanen bei Temperaturen von 400 bis 750 °C, mittleren Verweilzeiten von 0,2 bis 20 Sekunden und Drücken von 1 bis 3 bar, dadurch gekennzeichnet, daß sich im Inneren des Reaktors (1) ein über die gesamte Länge des Reaktionsrohres (2) erstreckender, axialsymmetrisch angeordneter Verdrängerkörper (3) befindet und der Spalt a zwischen dem Innendurchmesser $d_1$ des Reaktionsrohres (2) und dem Außendurchmesser $d_2$ des Verdrängerkörpers (3) eine Größe zwischen 5 und 1 cm aufweist.

2. Reaktor gemäß Anspruch 1, dadurch gekennzeichnet, daß der im Reaktionsrohr (2) axialsymmetrisch angeordnete Verdrängerkörper (3) rotierbar ausgestaltet für Umdrehungsgeschwindigkeiten von 5 bis 100 Umdrehungen/Minute ist.

3. Reaktor gemäß Anspruch 1 oder 2, dadurch gekennzeichnet, daß sich auf der Oberfläche des Verdrängerkörpers (3), ausgedehnt über dessen Gesamtlänge, im wesentlichen zur Achse des Verdrängerkörpers (3) parallel verlaufende Metallstreifen (4) befinden, deren radiale Kante (5) kürzer als a/2 ist.

4. Reaktor gemäß einem der Ansprüche 1 bis 3, dadurch gekennzeichnet, daß der Verdrängerkörper (3) als beidseitig verschlossenes Rohr oder massive Walze ausgebildet ist.

5. Verfahren zur kontinuierlichen Umsetzung von Vinylchlorid mit Chlorsilanen zu Vinylchlorsilanen unter Verwendung eines Reaktors gemäß einem der Ansprüche 1 bis 4, dadurch gekennzeichnet, daß der Reaktor (1) vertikal angeordnet ist.

## Claims

1. Reactor formed of an iron-containing material and having a heatable reaction tube for the continuous production of vinylchlorosilanes by reaction of vinylchloride with chlorosilanes at temperatures of 400 to 750°C, average residence times of 0.2 to 20 seconds and pressures of 1 to 3 bar, **characterised in that** there is to be found in the interior of the reactor (1) an axially symmetrically arranged displacement body (3) extending over the entire length of the reaction tube (2) and the gap a between the internal diameter $d_1$ of the reaction tube (2) and the external diameter $d_2$ of the displacement body (3) has a size between 5 and 1 cm.

2. Reactor according to claim 1, **characterised in that** the displacement body (3) arranged axially symmetrically in the reaction tube (2) is shaped to be able to rotate at rotational speeds of 5 to 100 rotations/minute.

3. Reactor according to claim 1 or claim 2, **characterised in that** metal strips (4) whose radial edge (5) is shorter than a/2 are to be found on the surface of the displacement body (3), extended over its entire length, running essentially parallel to the axis of the displacement body (3).

4. Reactor according to one of claims 1 to 3, **characterised in that** the displacement body (3) is formed as a tube closed at both ends or as a solid cylinder.

5. Process for the continuous reaction of vinylchloride with chlorosilanes to form vinylchlorosilanes using a reactor according to one of claims 1 to 4, **characterised in that** the reactor (1) is arranged vertically.

## Revendications

1. Réacteur en un matériau ferreux avec un tube de réaction chauffé pour la fabrication en continu de vinyl-chlorosilanes par réaction de chlorure de vinyle avec des chlorosilanes à des températures de 400 à 750°C, des durées de séjour moyennes de 0,2 à 20 secondes et des pressions de 1 à 3 bars, caractérisé par le fit qu'à l'intérieur du réacteur (1) se trouve un corps de déplacement ou obstacle (3) s'étendant sur toute la longueur du tube de réaction (2) en étant disposé de façon axialement symétrique et que la fente a entre le diamètre intérieur $d_1$ du tube de réaction (2) et le diamètre extérieur $d_2$ de l'obstacle (3) présente une taille comprise entre 5 et 1 cm.

2. Réacteur suivant la revendication 1, caractérisé par le fait que l'obstacle (3) disposé de façon axialement symétrique dans le tube de réaction (2) est conçu pour tourner à des vitesses de rotation de 5 à 100 tours/minute.

3. Réacteur suivant la revendication 1 ou 2, caractérisé par le fait que des bandes métalliques (4) dont le bord radial (5) est plus court que a/2, se trouvent sur la surface de l'obstacle (3), en s'étendant sur toute la longueur de ce dernier, de façon essentiellement parallèle à l'axe de l'obstacle (3).

4. Réacteur suivant l'une des revendications 1 à 3, caractérisé par le fait que l'obstacle (3) est réalisé sous la forme d'un tube obturé aux deux extrémités ou d'un cylindre massif.

5. Procédé pour la réaction en continu de chlorure de vinyle avec des chlorosilanes pour la production de vinyl-chlorosilanes avec utilisation d'un réacteur suivant l'une des revendications 1 à 4, caractérisé par le fait que le réacteur (1) est disposé verticalement.

Fig.